# EUROPEAN PATENT APPLICATION

(11) **EP 4 596 240 A1**
(43) Date of publication of application: **06.08.2025**
(21) Application number: 23872336.5
(22) Date of filing: 26.09.2023
(51) Int. Cl.: B32B 27/32, B65D 30/02, B65D 65/40

(54) **LAYERED BODY AND PACKAGING BAG**

(30) Priority: 27.09.2022 JP 2022153285
(71) Applicant: ZACROS Corporation, Tokyo 112-0002 (JP)
(72) Inventor: KUWABARA Hiroshi, Tokyo 112-0002 (JP)
(74) Representative: Lavoix
(86) International application number: PCT/JP2023/034935
(87) International publication number: WO 2024/071113

(57) **Abstract**

This laminate (10) has a base layer (11) constituted of a polyolefin-based resin layer, a sealant layer (12) constituted of a polyolefin-based resin layer, and a printed layer (13) constituted of a UV curable ink or an EB curable ink. The base layer (11) and the sealant layer (12) may be joined to each other with an adhesive layer (14) interposed therebetween. According to this laminate (10), it is possible to form the printed layer (13) stably even in a solvent-free state and to obtain excellent recyclability.

## Description

### TECHNICAL FIELD

The present invention relates to a laminate and a packaging bag.

Priority is claimed on Japanese Patent Application No. 2022-153285, filed September 27, 2022, the content of which is incorporated herein by reference.

### BACKGROUND ART

Patent Document 1 discloses a packaging material with which the amount of organic solvent used in solid white printing can be reduced by performing printing on a base using a printing ink, such as an oil-based ink or a water-based ink, and layering a heat fusible film constituted of a colored film thereon.

Patent Document 2 describes a packaging bag in which a reinforcing layer is provided by applying or bonding a curable resin, such as a UV curable resin, an electron beam curable resin, or a thermosetting resin, to a base for a spout.

### CITATION LIST

### Patent Document

Patent Document 1: Japanese Unexamined Patent Application, First Publication No. 2005-75351
Patent Document 2: Japanese Unexamined Patent Application, First Publication

### SUMMARY OF INVENTION

### Technical Problem

Regarding collection of plastic containers and packaging after use, since it is difficult to recycle packaging bags containing two or more kinds of resins, mono-material containers and packaging in which a single resin is used have been proposed. A polyethylene-based resin, as a single resin, is inexpensive and easy to be processed. However, since films and pouches in which a polyethylene-based resin is used absorb solvents and are affected by heat during drying, there is a problem in forming a stable printed layer.

The present invention has been made in consideration of the foregoing circumstances and aims to provide a laminate and a packaging bag for which a printed layer having excellent recyclability and remaining stable even in a solvent-free state can be formed.

### Solution to Problem

In order to resolve the foregoing problems, the present invention provides the following aspects.

A laminate according to a first aspect has a polyolefin-based resin layer formed of a polyolefin-based resin, and a printed layer constituted of a UV curable ink or an EB curable ink provided on the polyolefin-based resin layer..

In the laminate according to a second aspect, in the first aspect, the laminate has two or more of the polyolefin-based resin layers, and the printed layer is provided on an outer surface of the laminate or between the polyolefin-based resin layers.

In the laminate according to a third aspect, in the second aspect, the two or more of the polyolefin-based resin layers include a base layer constituted of a polyethylene-based resin layer and a sealant layer constituted of a polyethylene-based resin layer.

In the laminate according to a fourth aspect, in the third aspect, the base layer is colored milky white.

In the laminate according to a fifth aspect, in the third or fourth aspect, the printed layer is provided on the base layer, and the base layer is a biaxially stretched film constituted of a linear polyethylene resin having a melting point of 130°C or lower.

In the laminate according to a sixth aspect, in any one of the second to fifth aspects, the two or more polyolefin-based resin layers are adhered to each other with an adhesive layer therebetween while having no printed layer therebetween.

In the laminate according to a seventh aspect, in any one of the second to sixth aspects, the two or more polyolefin-based resin layers are adhered to each other by one of an extruded resin layer, a solvent-free adhesive layer, and a UV curable adhesive layer.

In a packaging bag according to an eighth aspect, the packaging bag has at least one member formed of the laminate according to any one of the first to seventh aspects.

In the packaging bag according to a ninth aspect, in the eighth aspect, the packaging bag has at least a body member formed of the laminate.

In the packaging bag according to a tenth aspect, in the eighth or ninth aspect, the packaging bag has a bottom member that has a fold line and is formed of the laminate.

### Advantageous Effects of Invention

According to the laminate of the present invention, by having a printed layer constituted of a UV curable ink or an EB curable ink, it is possible to form the printed layer stably even in a solvent-free state and to obtain excellent recyclability.

### BRIEF DESCRIPTION OF DRAWINGS

[FIG. 1] FIG. 1 is a cross-sectional view showing a laminate according to an embodiment of the present invention.
[FIG. 2] FIG. 2 is a front view showing an example of a packaging bag according to the embodiment of the present invention.

### DESCRIPTION OF EMBODIMENT

Hereinafter, a preferred embodiment of the present invention will be described. A laminate of this embodiment has a polyolefin-based resin layer formed of a polyolefin-based resin and a printed layer constituted of a curable ink formed on the polyolefin-based resin layer. The curable ink is a UV curable ink or an EB curable ink.

The laminate of the embodiment is mainly formed of a polyolefin-based resin layer having a polyolefin-based resin as a main component. For this reason, mono-material containers and packaging can be realized using the laminate of the embodiment. The polyolefin-based resin is not particularly limited as long as it is a polymer having olefins as a main component, and examples thereof include a polyethylene-based resin and a polypropylene-based resin.

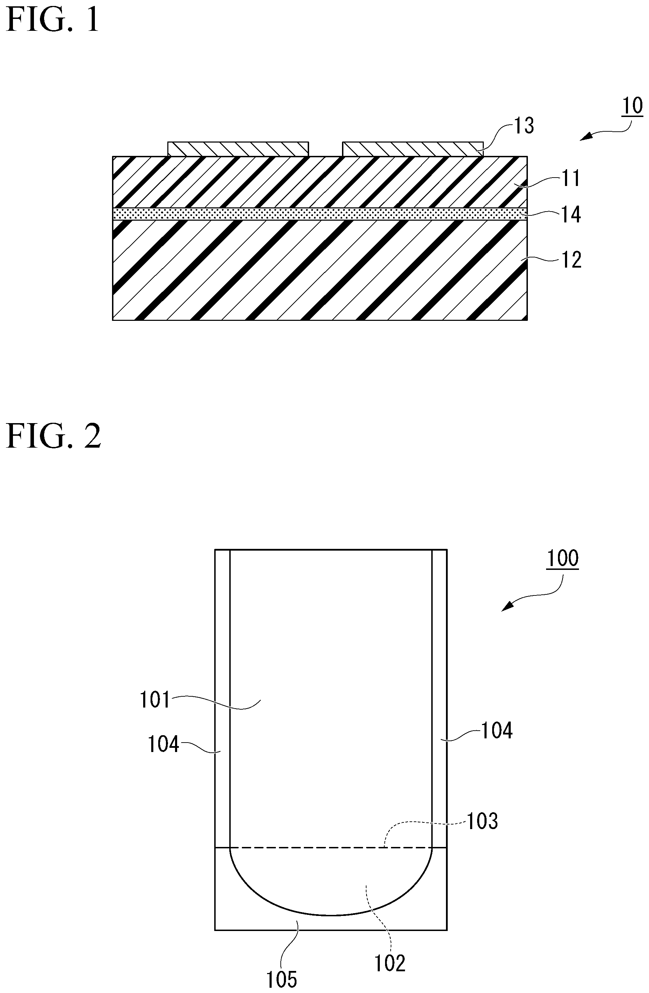

FIG. 1 shows a laminate 10 of the embodiment. The laminate 10 has a base layer 11 constituted of a polyolefin-based resin layer, a sealant layer 12 constituted of a polyolefin-based resin layer, and a printed layer 13 constituted of a curable ink. In the illustrated example, the printed layer 13 is formed on an outer surface of the laminate 10, but the printed layer 13 may be formed between the layers or the like of the laminate 10. There are one or more polyolefin-based resin layers and there may be two or more layers. Specifically, examples thereof include the base layer 11 and the sealant layer 12 (which will be described below), but it is not limited thereto.

The UV curable ink is an ink that can be cured by UV (ultraviolet rays) after printing, and the EB curable ink is an ink that can be cured by an EB (electron beam) after printing. Generally, these inks include coloring agent and a polymerizable compound (monomer, oligomer). Moreover, as necessary, a resin (polymer) or the like can be added to the ink. The curable ink, which has been cured, can form a coating film which is harder than a thermoplastic resin such as a polyolefin-based resin.

By layering the printed layer 13 constituted of the curable ink on the polyolefin-based resin layer, printing can be performed in a solvent-free state and heat drying can be omitted so that an influence of solvents and heat can be eliminated. Accordingly, even if a polyolefin-based resin such as a polyethylene-based resin having poor solvent resistance and heat resistance is used for a printing substrate, generation of residual solvent and restrictions on a printing substrate can be curbed. The laminate 10 may have the base layer 11 constituted of a polyethylene-based resin layer and the sealant layer 12 constituted of a polyethylene-based resin layer as the polyolefin-based resin layers. The printed layer 13 may be provided on the outer surface or the inner surface of the base layer 11 or on the outer surface of the sealant layer 12. The printed layer 13 may be provided on a single-layer polyolefin-based resin film.

The polymerizable compound used in the curable ink need only be a compound which can polymerize and cure the printed layer 13 when ultraviolet rays or electron beams are emitted. Since the energy of electron beams is high, in the case of EB curing, a reaction initiator such as a photoinitiator for UV curing or a thermal initiator for heat curing is unnecessary. In the case of UV curing, as necessary, a photoinitiator may be added.

The polymerizable compound may be a monofunctional monomer having one polymerizable functional group per molecule or may be a multifunctional monomer having two or more polymerizable functional groups per molecule, or these may be mixed in appropriate proportions. Examples of the polymerizable functional group include unsaturated functional groups such as a vinyl group, an allyl group, and a (meth)acrylate group. (Meth)acrylate is a general term for acrylate or methacrylate. The curable ink may contain two or more kinds of polymerizable compounds.

Examples of the monofunctional monomer used in the curable ink include an acrylamide compound such as N-acryloylmorpholine, an N-vinyl compound such as N-vinylcaprolactam, and monofunctional (meth)acrylates. Examples of the monofunctional (meth)acrylates include acyclic (meth)acrylates such as alkyl (meth)acrylates, aromatic (meth)acrylates such as benzyl (meth)acrylates, monocyclic (meth)acrylates such as cycloalkyl (meth)acrylates, polycyclic (meth)acrylates such as isobornyl (meth)acrylates, hydroxyl-containing (meth)acrylates such as hydroxyalkyl (meth)acrylates, and ether group-containing (meth)acrylates such as alkoxyalkyl (meth)acrylates.

Examples of the multifunctional monomer used in the curable ink include a divinyl ether compound, an allyl ether compound, and multifunctional (meth)acrylates. Examples of the multifunctional (meth)acrylates include alkylene glycol di(meth)acrylates, polyalkylene glycol di(meth)acrylates, trimethylolpropane tri(meth)acrylates, glycerin tri(meth)acrylates, pentaerythritol tri(meth)acrylates, pentaerythritol tetra(meth)acrylates, and cyclohexanedimethanol di(meth)acrylates.

Examples of the coloring agent used in the curable ink include an organic pigment, an inorganic pigment, a carbon pigment, and a dye. The curable ink may contain two or more kinds of coloring agent. From the viewpoint of durability, a pigment such as a phthalocyanine-based pigment, a quinacridone-based pigment, a metal lake pigment, a rhodamine-based pigment, an azo-based pigment, carbon black, or titanium dioxide is preferred.

The resin used in the curable ink is not particularly limited, and a resin having excellent solubility with a polymerizable compound such as a (meth)acrylate is preferred. Specific examples of the resin used in the curable ink include an acrylic resin, an alkyd resin, a saturated polyester resin, a polyvinyl chloride resin, a vinyl acetate resin, a maleic acid-based resin, a polyamide resin, a urethane resin, and an epoxy resin.

Desired additives may be mixed into the curable ink. Examples of the additives for the curable ink include a polymerization inhibitor, a dispersant, an antioxidant, a UV absorber, an organic solvent, and silicone. Printing can be performed with the curable ink in a solvent-free state, and the residual solvent in a polyolefin-based resin can be eliminated without using a volatile organic compound (VOC).

The printed layer 13 can be formed by performing printing with the curable ink in a solid shape or a patterned shape using a printing method such as gravure printing, letterpress printing, offset printing, screen printing, or ink-jetting, and then curing the ink. The thickness of the printed layer 13 is not particularly limited, and examples thereof include approximately 0.5 to 10 µm.

A UV curing step of the UV curable ink is performed by emitting ultraviolet rays toward an ink coating on the printing substrate using a light source such as a metal halide lamp or a light-emitting diode. An EB curing step of the EB curable ink is performed, for example, by emitting a beam generated by accelerating electrons at a voltage of approximately 10 to 100 kV toward an ink coating on the printing substrate. In the case of EB curing, in order to curb polymerization inhibition due to oxygen (O₂) or generation of ozone (O₃), it is preferable that an electron beam be emitted in an inert gas atmosphere such as nitrogen (N₂) or in a decompressed atmosphere (vacuum). The curable ink is cured in a short period of time, which provides excellent productivity.

The printed layer 13 may be formed on the entire surface of the polyolefin-based resin layer or may be formed on a part within a surface of the polyolefin-based resin layer. Two or more printed layers 13 may be stacked. A plurality of printed layers 13 may be formed of the same kind of curable ink or may be formed by combining different kinds of curable ink. A transparent protective coating layer (top coating) may be provided on the printed layer 13, but the proportion of dissimilar materials can be reduced by omitting the protective coating layer.

In order to further impart functionality or the like to the printed layer 13 in which the base layer 11 is formed, printing requiring drying may be performed. The heat resistance of the base layer 11 is improved by curing the printed layer 13 constituted of a curable ink. For this reason, even if printing requiring drying is performed on the base layer 11, it can withstand heat during drying. A solvent-type ink such as a water-based ink or an oil-based ink can be used for printing requiring drying. The surface on which printing requiring drying is performed may be the inner surface, may be the outer surface, or may be both surfaces of the base layer 11.

The base layer 11 of the laminate 10 may be a stretched polyolefin-based resin layer or may be a non-stretched polyolefin-based resin layer. More specifically, examples of its material include polyethylene-based resins, such as linear low density polyethylene (LLDPE), low density polyethylene (LDPE), medium density polyethylene (MDPE), and high density polyethylene (HDPE), and a polypropylene-based resin. The base layer 11 may be formed of one kind of polyolefin-based resin or may contain two or more kinds of polyolefin-based resin.

The base layer 11 may be constituted of one layer or may be constituted of two or more layers. When the base layer 11 is constituted of two or more layers, the same resin may be used for the layers or different kinds of resin may be used. For example, different base layers 11 may be formed using resin layers having different densities, stretching directions, additives, and the like among polyethylene-based resins, and they may be layered on the laminate 10. The thickness of the base layer 11 is not particularly limited, and examples thereof include approximately 10 to 50 µm.

The base layer 11 may be colored milky white or the like. By coloring the base layer 11 milky white, the concealing properties can be improved. The printed layer 13 may be provided on the outer surface of the colored base layer 11, or a different base layer 11 provided with the printed layer 13 may be laminated on the outward side of the colored base layer 11.

When the printed layer 13 is provided in the base layer 11, the base layer 11 may be a biaxially stretched film constituted of a linear polyethylene resin having a melting point of 130°C or lower. Specific examples of the linear polyethylene resin include LLDPE. A polyethylene-based resin having a higher melting point may be used for the base layer 11. However, even if a polyethylene-based resin having a lower melting point is used for the base layer 11, the printed layer 13 can be formed in a solvent-free state.

It is preferable that the sealant layer 12 of the laminate 10 be formed of a sealant resin. Examples of the sealant resin include polyethylene-based resins having a relatively low density, such as linear low density polyethylene (LLDPE) and low density polyethylene (LDPE), a non-stretched polyethylene-based resin, and a polypropylene-based resin. The sealant layer 12 may be formed of one kind of polyolefin-based resin or may contain two or more kinds of polyolefin-based resin.

The thickness of the sealant layer 12 is not particularly limited, and examples thereof include approximately 50 to 180 µm. The sealant layer 12 may be made of a single-layer sealant film or may be made of a multilayer sealant film. The multilayer sealant film can be formed by layering two or more film-shaped sealant resin layers by a co-extrusion method, an extrusion lamination method, a sandwich lamination method, a heat lamination method, or the like.

The base layer 11 and the sealant layer 12 may be joined with an adhesive layer 14 interposed therebetween. When two or more base layers 11 are layered, they can be laminated with the adhesive layer 14 therebetween.

The adhesive layer 14 may be formed of an adhesive or may be formed of an anchor coating agent. The material for forming the adhesive layer 14 is not particularly limited, and examples thereof include a urethane-based compound, an epoxy-based compound, an isocyanate-based compound, polyethyleneimine, and an organic titanium compound such as titanium alkoxide. Examples of the thickness of the adhesive layer 14 include approximately 0.1 to 10 µm, approximately 1 to 6 µm, and approximately 3 to 4 µm.

The two or more polyolefin-based resin layers 11 and 12 such as the base layer 11 and the sealant layer 12 may be adhered to each other with the adhesive layer 14 therebetween while having no printed layer 13 therebetween. Accordingly, when the polyolefin-based resin layers 11 and 12 are adhered to each other with the adhesive layer 14 therebetween, a step due to the printed layer 13 is unlikely to be generated, and therefore the adhesive strength can be made stable.

For adhesion between the layers of the laminate 10, two or more polyolefin-based resin layers such as the base layer 11 and the sealant layer 12 may be adhered to each other using any of an extruded resin layer, a solvent-free adhesive layer, and a UV curable adhesive layer. Compared to the case of using a solvent-type adhesive layer, an influence of the solvent on the polyolefin-based resin layers and an influence of heat due to drying can be curbed.

An extruded resin layer made of a polyolefin-based resin may be layered as the extruded resin layer. When the extruded resin layer is used between the layers, the adhesive layer 14 can be omitted. The laminate 10 can have a polyolefin-based resin layer such as a polyethylene-based resin layer or a polypropylene-based resin layer in addition to the base layer 11, the sealant layer 12, and the extruded resin layer. When the extruded resin layer is laminated, surface treatment such as corona treatment, plasma treatment, or ozone treatment may be performed with respect to the resin film or the extruded resin in a melted state.

When the polyolefin-based resin layers are adhered to each other using the extruded resin layer, it is preferable that the melting point of the resin used for the extruded resin layer be approximately the same or lower than the melting point of the resin used for the polyolefin-based resin layers. For example, it is preferable that a polyethylene-based resin layer be used as the extruded resin layer for adhering the polyethylene-based resin layers to each other, and it is preferable that a polypropylene-based resin layer be used as the extruded resin layer for adhering the polypropylene-based resin layers to each other.

Examples of the solvent-free adhesive layer include the adhesive layer 14 using a solvent-free adhesive such as an acryl-based adhesive, a polyvinyl acetate-based adhesive, a polyamide-based adhesive, a polyether-based adhesive, a polyester-based adhesive, an epoxy-based adhesive, a urethane-based adhesive, a silicone-based adhesive, or a cyanoacrylate-based adhesive.

Examples of the UV curable adhesive layer include the adhesive layer 14 using a UV curable adhesive containing a photopolymerizable compound, a photoinitiator, a photosensitizer, or the like. Examples of the photopolymerizable compound include photo-radical polymerizable compounds such as acrylates and vinyl ethers, and photocationic polymerizable compounds such as an epoxy compound and an oxetane compound.

When the laminate 10 has a plurality of polyolefin-based resin layers as the base layer 11, the sealant layer 12, the extruded resin layer, and the like, all the polyolefin-based resin layers may be polyethylene-based resin layers, or all the polyolefin-based resin layers may be polypropylene-based resin layers. In the same laminate 10, two or more kinds of polyolefin-based resin layers having different main component monomers of the polyolefin-based resins may be mixed and layered.

Here, the main component monomer in a polyolefin-based resin is a monomer having the largest weight ratio in the resin. For example, the main component monomer of a polyethylene-based resin is ethylene, and the main component monomer of a polypropylene-based resin is propylene. In the case of a homopolymer, the monomer becomes the main component monomer. In addition, the main component resin in a polyolefin-based resin layer is a resin having the largest weight ratio in the resin layer.

In the polyethylene-based resin layer, the proportion of the polyethylene-based resin is preferably 50% by weight or higher and may be 80 to 100% by weight. The polyethylene-based resin may be a homopolymer of ethylene or may be a copolymer having ethylene as a main component. Examples of monomers (comonomers) other than ethylene include one kind or two or more kinds of α-olefins such as 1-butene, 1-hexene, and 1-octene, cyclic olefins such as norbornene, and vinyl-based monomers such as vinyl acetate, polyvinyl chloride, and acrylic acid. When the polyethylene-based resin is copolymerized with a monomer having an ester group such as vinyl acetate, a part of the ester group may be saponified to form a copolymer including vinyl alcohol.

The proportion of ethylene in the constituent monomers of the polyethylene-based resin is preferably 50% by weight or higher and may be 80 to 100% by weight, for example. The ethylene or the comonomer used in the polyethylene-based resin may be a compound derived from a fossil resource such as petroleum or may be a compound derived from biomass such as plants. The resin included in the polyethylene-based resin layer may be only a polyethylene-based resin or may contain a different resin component. The polyethylene-based resin may be one kind, may be a blend of two or more kinds, or may include recycled polyethylene.

In the polypropylene-based resin layer, the proportion of the polypropylene-based resin is preferably50% by weight or higher and may be 80 to 100% by weight. The polypropylene-based resin may be a homopolymer (homo-PP) of propylene or may be a random copolymer (random PP) or a block copolymer (block PP) in a propylene-ethylene copolymer or the like. Examples of monomers (comonomers) other than propylene include α-olefins such as ethylene, 1-butene, 1-hexene, and 1-octene, and vinyl-based monomers such as vinyl acetate, polyvinyl chloride, and acrylic acid. The comonomer of the polypropylene-based resin may be one kind or two or more kinds.

The proportion of propylene in the constituent monomers of the polypropylene-based resin is preferably 50% by weight or higher and may be 80 to 100% by weight, for example. The propylene or the comonomer used in the polypropylene-based resin may be a compound derived from a fossil resource such as petroleum or may be a compound derived from biomass such as plants. The resin included in the polypropylene-based resin layer may be only a polypropylene-based resin or may contain a different resin component. The polypropylene-based resin may be one kind, may be a blend of two or more kinds, or may include recycled polypropylene.

The resin included in the polyolefin-based resin layers such as the base layer 11 and the sealant layer 12 may be only a polyolefin-based resin, only a polyethylene-based resin, or only a polypropylene-based resin, may contain a different resin component, or may contain an additive other than the resin. The additive is not particularly limited, and examples thereof include an antioxidant, a lubricant, an anti-blocking agent, a flame retardant, a UV absorber, a light stabilizer, an antistatic agent, a coloring agent, and a crosslinking agent. The additive may have a component which is compatible with the resin or may have a component which is incompatible with the resin.

At least a part of the polyolefin-based resin may include a recycled polyolefin-based resin. The method for recycling a polyolefin-based resin is not particularly limited and may be chemical recycling in which used resins are decomposed into monomers or the like and then polymerized again or may be mechanical recycling in which used resins are regenerated while remaining as polymers through steps of crushing, sorting, and the like. A mixture of a recycled resin and a new resin may be used.

With respect to the total weight of the laminate 10 of the embodiment described above, it is preferable that the total of a particular resin be 90% by weight or higher and the total of materials other than the particular resin be 10% by weight or lower, and it is more preferable that the total of the particular resin be 95% by weight or higher and the total of the materials other than the particular resin be 5% by weight or lower. Accordingly, even if a curable ink, an adhesive, or the like is used in the laminate 10, a mono-material of a particular resin can be realized. Examples of the particular resin include a polyolefin-based resin, a polyethylene-based resin, and a polypropylene-based resin. Two or more kinds of resins corresponding to the particular resin may be used in the laminate 10.

The laminate 10 of the embodiment described above is in a form of a layered film having a polyolefin-based resin such as a polyethylene-based resin as a main component and can be used for various purposes. The method for forming a layered film is not particularly limited, and examples thereof include dry lamination, extrusion lamination, heat lamination, coextrusion, and coating. Each of the layers may be layered using a different method. The sealant layers may be placed face to face and the layered bodies can be joined by fusion.

The laminate 10 of the embodiment can be used for producing a packaging body such as a packaging bag. At least one member of the packaging body need only be formed from the laminate 10, and other members may be films having no printed layer 13, for example. The purpose of the packaging body is not particularly limited and examples thereof include disposables, refilling, storing, accommodating goods or the like, and the like. However, it is suitable for the purpose of enclosing a liquid and is particularly suitable for the purpose of refilling contents once or a plurality of times into a main container used when consuming the contents. In this case, the main container can be made durable for long-term use, and packaging of a refill container can be simplified. In addition, when the refill container is disposed after contents have been used up, recycling is facilitated.

Examples of the packaging body include packaging bags such as a pouch and a bag, a tube, a container, sleeve packaging, strip packaging, and a lid material. Specific examples of the packaging bag include a three-side sealed bag, a four-side sealed bag, a pillow bag, a gusset bag, and a standing pouch. When the laminate is a flexible layered film, a packaging body of flexible packaging can be formed.

FIG. 2 shows an example of a packaging bag which becomes a standing pouch. This packaging bag 100 is formed using a pair of body members 101 and a bottom member 102 folded in half along a fold line 103. The body members 101 are respectively disposed at the front and the rear. The front and rear body members 101 may have the same planar shape. The bottom member 102 is folded along the fold line 103 such that the folded outer surfaces face each other. Body seal portions 104 are formed on the left and right above the fold line 103, and inner surfaces of the front and rear body members 101 are joined to each other.

The bottom member 102 is sandwiched between the front and rear body members 101 with the fold line 103 thereabove. Bottom seal portions 105 in which the inner surfaces of the bottom member 102 are joined to the inner surfaces of the body members 101 are formed below the fold line 103. The bottom seal portions 105 join areas of the bottom member 102 defined by the fold line 103 to the body members 101 respectively on the same side in a forward-rearward direction. The bottom member 102 can be unfolded along the fold line 103 to allow the packaging bag 100 to stand on its own.

When the packaging bag 100 has the body members 101 and the bottom member 102, the laminate 10 of the embodiment may be used for either the body members 101 or the bottom member 102 or may be used for both. Images including patterns, characters, and the like can be displayed on the surfaces of the packaging bag 100 using the laminate 10 having the printed layer 13, in which a curable ink is used, for the body members 101 or the bottom member 102.

After the printed layer 13 is formed using a curable ink on the outer surfaces of the areas of the body members 101 where the body seal portions 104 or the bottom seal portions 105 are to be formed, the body seal portions 104 or the bottom seal portions 105 may be formed by heating the body members 101 from the sides on the outer surfaces. Accordingly, sticking of the body members 101 to heat sealing members such as seal bars can be curbed.

The packaging bag 100 may have a filling port, a spout, and the like. For example, an opening may be provided at the upper part of the packaging bag 100 between the front and rear body members 101 and can be used for filling or pouring contents. After it is filled with contents, the packaging bag 100 may be sealed by joining the body members 101 to each other. When the packaging bag 100 is opened, a joint spot between the body members 101 can be easily torn apart. Although it is not particularly illustrated, a spout may be formed to have a shape protruding thinly at the upper part or a corner part of the packaging bag 100. The spout may be molded using a film or may be a spout type.

The dimensions of the packaging body are not particularly limited. For example, for the purpose of a refill container, the vertical height is approximately 100 to 500 mm and the lateral width is approximately 70 to 300 mm, and the filling amount is approximately 100 cm³ to 5,000 cm³. The state of contents is not particularly limited, and examples thereof include fluid such as liquid, powder, and particles, and solids such as articles. The kind of contents is not particularly limited, and examples thereof include detergent, medicine, cosmetics, pharmaceuticals, beverage, seasoning, ink, paint, and fuel.

The packaging body may be formed from only the laminate 10 of the embodiment or may be combined with accessories such as a label, a tag, a straw, or an outer box. From the viewpoint of recycling, it is preferable that accessories be able to be separated from the packaging body. In order to make it easy to open the packaging body, easy-opening means such as a perforation, a notch, or a half-cut groove may be formed around the opening part.

The method for recycling the laminate 10 or the packaging bag 100 of the embodiment after use is not particularly limited, and can be suitably selected depending on the condition and the like at the time of collection. Since the proportion of the polyolefin-based resin in the laminate 10 of the embodiment can be increased, it can be subjected to both chemical recycling and mechanical recycling described above. By recycling the laminate 10 or the packaging bag 100 of the embodiment, it can also be regenerated into the same kind of product, such as the laminate 10 or the packaging bag 100. Materials obtained through the recycling may be utilized for products such as paint, molded articles, and hydrocarbon oil.

Hereinabove, the present invention has been described on the basis of a preferred embodiment. However, the present invention is not limited to the embodiment described above, and various modifications can be made within a range not departing from the gist of the present invention. Examples of modifications include addition, replacement, omission, and other changes of the constituent elements.

### EXAMPLES

Hereinafter, examples of the present invention will be described specifically. However, the present invention is not limited to these examples.

A printed layer was formed on a printing substrate by EB offset printing using an EB curable ink in Example 1, by UV printing using a UV curable ink in Example 2, by oil-based gravure printing using an oil-based ink in Comparative Example 1, and by water-based flexographic printing using a water-based ink in Comparative Example 2.

In a residual solvent test, uniaxially stretched HDPE was used as the printing substrate. Gas chromatography was used for checking whether an organic solvent was detected in the printing substrate after printing. It was evaluated as good (A) when no residual solvent was detected, and it was evaluated as bad (C) when a residual solvent was detected.

In a printing test (multi-color printing, pitch), three kinds of printing substrates, such as uniaxially stretched HDPE, non-stretched HDPE, and biaxially stretched LLDPE, were used. While the printing substrate was transported roll-to-roll, a multi-color printed layer was formed at a predetermined pitch. It was evaluated as good (A) when the pitch was accurate, it was evaluated as slightly bad (B) when the pitch was slightly inaccurate, and it was evaluated as bad (C) when the pitch was very inaccurate.

**TABLE 1**

| | | Residual solvent | Multi-color printing, pitch | | |
|---|---|---|---|---|---|
| | | Uniaxially stretched HDPE | Uniaxially stretched HDPE | Non-stretched HDPE | Biaxially stretched LLDPE |
| Example 1 | EB offset printing | A | A | A | A |
| Example 2 | UV printing | A | A | A | A |
| Comparative Example 1 | Oil-based gravure printing | C | In between A to B | C | C |
| Comparative Example 2 | Water-based flexographic printing | A | In between B to C | C | C |

As shown in Table 1, since an oil-based ink was used in Comparative Example 1, a residual solvent was detected. In Comparative Examples 1 to 2, due to the influence of heat drying, the result of multi-color printing was poor. In Examples 1 to 2, since there was no need to dry the ink, regeneration could be performed with an accurate pitch even when non-stretched HDPE and biaxially stretched LLDPE were used as the printing substrate without being limited to uniaxially stretched HDPE having a high modulus of elasticity.

### INDUSTRIAL APPLICABILITY

According to the present invention, by having a printed layer constituted of a UV curable ink or an EB curable ink, it is possible to form a printed layer having excellent recyclability and remaining stable even in a solvent-free state. Therefore, the present invention can be industrially applied.

### REFERENCE SIGNS LIST

10 Laminate
11 Base layer (polyolefin-based resin layer)
12 Sealant layer (polyolefin-based resin layer)
13 Printed layer
14 Adhesive layer
100 Packaging bag
101 Body member
102 Bottom member
103 Fold line
104 Body seal portion
105 Bottom seal portion

## Claims

1. A laminate comprising:
a polyolefin-based resin layer formed of a polyolefin-based resin, and
a printed layer constituted of a UV curable ink or an EB curable ink provided on the polyolefin-based resin layer.

2. The laminate according to claim 1,
wherein the laminate has two or more of the polyolefin-based resin layers, and the printed layer is provided on an outer surface of the laminate or between the polyolefin-based resin layers.

3. The laminate according to claim 2,
wherein the two or more of the polyolefin-based resin layers include a base layer constituted of a polyethylene-based resin layer and a sealant layer constituted of a polyethylene-based resin layer.

4. The laminate according to claim 3,
wherein the base layer is colored milky white.

5. The laminate according to claim 3,
wherein the printed layer is provided on the base layer, and the base layer is a biaxially stretched film constituted of a linear polyethylene resin having a melting point of 130°C or lower.

6. The laminate according to claim 2,
wherein the two or more of the polyolefin-based resin layers are adhered to each other with an adhesive layer therebetween while having no printed layer therebetween.

7. The laminate according to claim 2,
wherein the two or more of the polyolefin-based resin layers are adhered to each other by one of an extruded resin layer, a solvent-free adhesive layer, and a UV curable adhesive layer.

8. A packaging bag, comprising at least one member that is formed of the laminate according to any one of claims 1 to 7.

9. The packaging bag according to claim 8, comprising at least a body member that is formed of the laminate.

10. The packaging bag according to claim 8, comprising a bottom member that has a fold line and is formed of the laminate.
